# EUROPEAN PATENT SPECIFICATION

(11) **EP 3 804 884 B1**
(45) Date of publication and mention of the grant of the patent: **02.03.2022**
(21) Application number: 19202668.0
(22) Date of filing: 11.10.2019
(51) Int. Cl.: B22F 5/10, B22F 10/28, B22F 10/366, B29C 64/153, B33Y 10/00

(54) **ADDITIVE MANUFACTURING OF A THIN-WALLED METAL ARTICLE OF HIGH ROUNDNESS AND CONCENTRICITY AND LOW SURFACE ROUGHNESS**
GENERATIVE FERTIGUNG EINES DÜNNWANDIGEN METALLGEGENSTANDES MIT HOHER RUNDHEIT UND KONZENTRIZITÄT UND GERINGER OBERFLÄCHENRAUHEIT
FABRICATION ADDITIVE D'UN ARTICLE DE MÉTAL À PAROI MINCE À CIRCULARITÉ ET CONCENTRICITÉ ÉLEVÉES ET À FAIBLE RUGOSITÉ DE SURFACE

(43) Date of publication of application: 14.04.2021
(73) Proprietor: Heraeus Additive Manufacturing GmbH, 63450 Hanau (DE)
(72) Inventor: STOLPE, Moritz, 63450 Hanau (DE); KLETT, Eduard, 63450 Hanau (DE); HUMM, Stephan, 63450 Hanau (DE); KILIC, Beytullah Yasin, 63450 Hanau (DE)
(74) Representative: Heraeus IP

(56) References cited:
- WO-A1-2015/042089
- US-A1- 2018 257 141
- US-A1- 2019 263 050

## Description

The present invention relates to the preparation of thin-walled metal parts by a powder-bed-based beam melting additive manufacturing process. The thin-walled metal parts comprise an amorphous metal alloy.

By additive manufacturing (such as a powder-bed-based beam melting), articles of complex geometry can be manufactured.

For the preparation of thin-walled metal articles via additive manufacturing, it remains very challenging to achieve at the same time high roundness, high concentricity, and low surface roughness, in particular over the entire height of a thin-walled part of high aspect ratio. Roundness and concentricity are independent parameters. So, if roundness were improved by a certain measure, it remains open whether or not said measure would improve concentricity as well (or may even adversely affect concentricity).

Amorphous metals have beneficial properties such as high strength and corrosion resistance. However, preparing amorphous thin-walled metal tubes of high aspect ratio (i.e. high ratio of tube height to tube wall thickness) by casting is very problematic. For substantially suppressing the formation of a crystalline structure upon solidification of the molten metal, a sufficiently high cooling rate needs to be applied. On the other hand, before its solidification, the molten metal should have completely occupied the mold. In practice, it has turned out to be extremely difficult to comply with both requirements. If applying a high cooling rate, viscosity of the molten metal increases significantly, thereby making it very difficult to fully occupy thin and lengthy mold cavities.

One approach for preparing thin-walled amorphous metal articles of high aspect ratio is by additive manufacturing. However, as mentioned above, achieving at the same time high roundness, high concentricity, and low surface roughness remains very challenging.

An exemplary article which comprises a thin-walled tube part of high aspect ratio is a flexspline of a strain wave gear. A flexspline comprises a thin-walled tube part, which in turn has toothed and non-toothed areas on its outer surface. While wall thickness is typically less than 2 mm, height of said tube part can be 50 times larger than its wall thickness.

D.C. Hofmann etal., Scientific Reports, 6:37773, DOI: 10.1038/srep37773 (2016) describe the use of bulk metallic glass (BMG) for preparing strain wave gear components (such as a flexspline) via a casting process.

US 2014/224050 A1 describes a method of fabricating a strain wave gear component by shaping a BMG-based material using a mold in conjunction with one of a thermoplastic forming technique and a casting technique.

US 2018/0257141 A1 describes the preparation of a strain wave gear flexspline by additive manufacturing (e.g. a powder-bed-based method such as selectiv laser melting). As wall thickness of a flexspline might be in the order of the beam spot size, US 2018/0257141 A1 indicates that the thin-walled part can be prepared in each powder layer by a single beam scan.

T. Ollison and K. Berisso, Journal of Industrial Technology, "Three-dimensional printing build variables that impact cylindricity", vol. 26(1), 2010, pp. 2-10, studied the effects of build orientation, printhead life and diameter of 3D printed parts on their cylindricity. It was concluded that the build orientation is the only parameter which significantly affected cylindricity of the additively manufactured article.

WO2015042089A1 describes a method for building a tubular object by a layer-by-layer additive manufacturing process. A structure integrally connected to the tubular object for supporting a portion of the tubular object is formed.

US2019263050A1 discloses a method for producing a tubular body with reduced internal stress by using 3D printing. The tubular body has an outer wall with a stiffening structure extending along at least part of the outer wall. The method sets a printing plane for 3D printing with a 3D printer, and prints a tubular body layer in the printing plane with the 3D printer.

It is an object of the present invention to provide an efficient process for preparing an article comprising a thin-walled metal tube part, such as a flexspline, of high roundness, high concentricity, and low surface roughness.

The object is solved by a process for preparing an article which comprises a thin-walled metal tube, wherein the thin-walled metal tube comprises an amorphous metal alloy, wherein the thin-walled metal tube has an outer wall surface, an inner wall surface, and a bulk part in between the outer and inner wall surfaces, and at least the thin-walled metal tube is prepared by additive manufacturing using laser or electron beam melting, comprising:
(a) applying a layer of a metal powder on a substrate,
(b) scanning pre-defined areas of the layer with the beam, thereby melting the metal powder which becomes part of the thin-walled metal tube, wherein the scanning comprises:
   (b1) moving the beam along an outer wall surface scanning line SLows, thereby melting the powder which is located at the outer wall surface of the thin-walled metal tube;
   (b2) moving the beam along an inner wall surface scanning line SL_{IWS}, thereby melting the powder which is located at the inner wall surface of the thin-walled metal tube;
   (b3) moving the beam along bulk scanning lines SL_{Bulk}, thereby melting the powder which is located in the bulk part of the thin-walled metal tube, wherein the bulk scanning lines SL_{Bulk} comprise
      (b3.1) one or more offset scanning lines SL_{OWS-offset} which are offset from the outer wall surface scanning line SLows, and
      (b3.2) one or more offset scanning lines SL_{IWS-offset} which are offset from the inner wall surface scanning line SL_{IWS}.

As demonstrated further below by the Examples, the balance between high roundness, high concentricity and low surface roughness is significantly improved if additional beam scanning lines SLows-offset and SL_{IWS-offset} which are offset from the outer and inner wall surface scanning lines SLows and SL_{IWS} are used for melting the metal powder which becomes part of the thin-walled tube part.

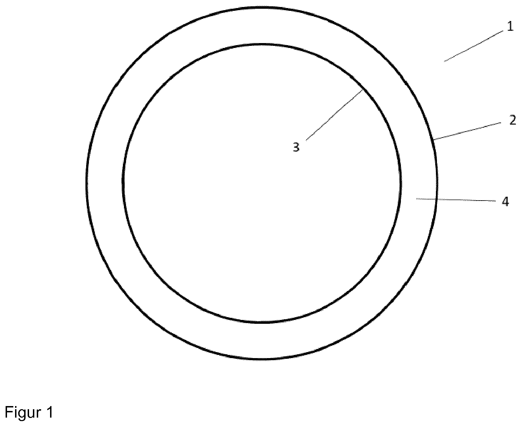

As any tube-shaped article, the thin-walled tube part comprises an outer wall surface and an inner wall surface. The bulk part in between the inner and outer wall surfaces forms the inner part of the thin tube wall. Figure 1 is a cross section of the thin-walled tube 1, in perpendicular direction to the tube axis, which shows the outer wall surface 2, the inner wall surface 3 and the bulk part 4 in between the outer and inner wall surfaces. In Figure 1, the outer wall surface 2 is non-toothed. Alternatively, the outer wall surface 2 might be toothed.

Typically, the tube is a circular tube.

The thin-walled tube may have a wall thickness of 10 mm or less, more preferably 5000 µm or less, even more preferably 1500 µm or less. In an exemplary embodiment, the thin-walled tube may have a wall thickness of from 50 µm to 10 mm, more preferably 50 µm to 5000 µm, even more preferably 80 µm to 1500 µm.

Furthermore, the thin-walled tube may have a hight H and a minimum wall thickness Dₘᵢₙ, wherein the ratio H/Dₘᵢₙ is at least 10, more preferably at least 20, even more preferably at least 50. In an exemplary embodiment, H/Dₘᵢₙ is from 10 to 10000, more preferably 20 to 5000, more preferably 50 to 4000. In another exemplary embodiment, H/Dₘᵢₙ is from 10 to 1000, more preferably 20 to 500, more preferably 50 to 400.

In a preferred embodiment, the article which is prepared by the process of the present invention is a gear component, in particular a flexspline. As known to the skilled person and indicated above, a flexspline is a component of a strain wave gear (also referred to as a harmonic drive gear).

As outlined above, at least the thin-walled tube part of the article is prepared by additive manufacturing using laser or electron beam melting. Optionally, the complete article might be additively manufactured by laser or electron beam melting. In general, if an article (or a part thereof) is additively manufactured by laser or electron beam melting, the process typically comprises the following steps: (i) a layer of a metal powder is applied onto a substrate, (ii) the laser or electron beam scans over and thereby melts those areas of the metal powder layer which become part of the article, (iii) after the molten metal has solidified, a new metal powder layer is applied and pre-defined areas of the layer are again scanned and melted by the beam. Layer by layer, the final article is additively manufactured.

In the process of the present invention, after having applied a metal powder layer onto a substrate, the beam scans over pre-defined areas of the applied metal powder layer and melts the metal powder which becomes part of the thin-walled metal tube, wherein the scanning comprises
(b1) moving the beam along an outer wall surface scanning line SLows, thereby melting the powder which is located at the outer wall surface of the thin-walled metal tube;
(b2) moving the beam along an inner wall surface scanning line SL_{IWS}, thereby melting the powder which is located at the inner wall surface of the thin-walled metal tube;
(b3) moving the beam along bulk scanning lines SL_{Bulk}, thereby melting the powder which is located in the bulk part of the thin-walled metal tube, wherein the bulk scanning lines SL_{Bulk} comprise
   (b3.1) one or more offset scanning lines SL_{OWS-offset} which are offset from the outer wall surface scanning line SLows, and
   (b3.2) one or more offset scanning lines SL_{IWS-offset} which are offset from the inner wall surface scanning line SL_{IWS}.

The scanning steps (b1), (b2), (b3.1), and (b3.2) might be carried out in any possible chronological sequence. If two or more beam sources are used in the additive manufacturing process, at least some of the scanning steps might be carried out simultaneously or may overlap in time.

The substrate onto which the powder layer is applied might be the build platform or a previously applied metal powder layer.

The outer wall surface scanning line SLows and each of its offset scanning lines SL_{OWS-offset}, as well as the inner wall surface scanning line SL_{IWS} and each of its offset scanning lines SL_{IWS-offset} might be a curved line (i.e. a curve). The curve might be an open curve or a closed curve. In the context of the present invention, a spline (e.g. a spline made of linear segments or a spline of higher degree) is also considered as a curve.

The beam may have a beam spot diameter on the surface of the metal powder layer of 5 µm to 500 µm, more preferably 20 µm to 150 µm.Typically, a constant beam spot diameter is used throughout the process of the present invention.

The distance Dows between the outer wall surface scanning line SLows and its adjacent (i.e. closest) offset scanning line SL_{OWS-offset} and, if two or more offset scanning lines SLows-offset are present, the distance D_{OWS-offset} between two adjacent offset scanning lines SLows-offset is preferably in the range of 0.1*d_{bs} to 5.0*d_{bs}, more preferably 0.3*d_{bs} to 2.0*d_{bs}, wherein d_{bs} is the beam spot diameter; and the distance D_{IWS} between the inner wall surface scanning line SL_{IWS} and its adjacent (i.e. closest) offset scanning line SL_{IWS-offset} and, if two or more offset scanning lines SL_{IWS-offset} are present, the distance D_{IWS-offset} between two adjacent offset scanning lines SL_{IWS-offset} is preferably in the range of 0.1*d_{bs} to 5.0*d_{bs}, more preferably 0.3*d_{bs} to 2.0*d_{bs}, wherein d_{bs} is the beam spot diameter.

The distance Dows between the outer wall surface scanning line SLows and its adjacent (i.e. closest) offset scanning line SL_{OWS-offset} and, if two or more offset scanning lines SLows-offset are present, the distance D_{OWS-offset} between two adjacent offset scanning lines SL_{OWS-offset} preferably varies by less than 25%, more preferably less than 15%; and the distance D_{IWS} between the inner wall surface scanning line SL_{IWS} and its adjacent (i.e. closest) offset scanning line SL_{IWS-offset} and, if two or more offset scanning lines SL_{IWS-offset} are present, the distance D_{IWS-offset} between two adjacent offset scanning lines SL_{IWS-offset} preferably varies by less than 25%, more preferably less than 15%.

The distance is the normal line distance (in the following referred to as the normal distance). As generally known, the normal (line) distance between a point X1 on a curve x and a curve y can be determined as follows: The tangent line to the curve x at point X1 is determined. The line perpendicular to the tangent line at the point X1 is determined and intersects the curve y at point Y1. The normal distance is the length of the line segment X1Y1. A variation in normal distance of less than 25% means that the longest normal distance and the shortest normal distance between adjacent curves differ by less than 25%.

In a preferred embodiment, each of the offset scanning lines SLows-offset is a parallel curve to the outer wall surface scanning line SLows; and/or each of the offset scanning lines SL_{IWS-offset} is a parallel curve to the inner wall surface scanning line SLiws.

Preferably, the bulk scanning lines SL_{Bulk} comprise at least two offset scanning lines SLows-offset and at least two offset scanning lines SL_{IWS-offset}.

In an exemplary embodiment, the bulk scanning lines may comprise up to 10 (e.g. 1 to 10, more preferably 2 to 6) offset scanning lines SLows-offset and/or up to 10 (e.g. 1 to 10, more preferably 2 to 6) offset scanning lines SL_{IWS-offset}.

The outer wall surface scanning line SLows and the adjacent offset scanning line SLows-offset and, if two or more offset scanning lines SLows-offset are present, two adjacent offset scanning lines SL_{OWS-offset} may have the same scanning direction (i.e. the same movement direction of the beam) or rather alternate scanning directions. The same applies for the inner wall surface scanning line SL_{IWS} and its offset scanning lines SL_{IWS-offset}.

In addition to the offset scanning lines SLows-offset and SL_{IWS-offset}, the bulk scanning lines SL_{Bulk} may comprise hatch scanning lines SL_{Hatch}.

The hatch scanning lines SL_{Hatch} may comprise straight scanning lines. Preferably, adjacent straight hatch scanning lines SL_{Hatch} are parallel to each other or, if not parallel, are inclined to each other by less than 20°, more preferably less than 10°. These substantially parallel straight hatch scanning lines do not intersect with each other. Adjacent hatch scanning lines may have the same scanning direction (i.e. the same movement direction of the beam) or rather alternate scanning directions.

The distance D_{Hatch} between two adjacent hatch scanning lines SL_{Hatch} is preferably in the range of 0.1*d_{bs} to 5.0*d_{bs}, more preferably 0.3*d_{bs} to 2.0*d_{bs}, wherein d_{bs} is the beam spot diameter.

The hatch scanning lines SL_{Hatch} may also form a crosshatch pattern, comprising a first set of straight hatch scanning lines and a second set of straight hatch scanning lines, wherein straight hatch scanning lines of the first set and straight hatch scanning lines of the second set intersect with each other (e.g. at an angle of from 30° to 150°). In each set of straight hatch scanning lines, adjacent lines are preferably parallel to each other or, if not parallel, are inclined to each other by less than 20°, more preferably less than 10°, and do not intersect with each other.

Preferably, the hatch scanning lines SL_{Hatch} do not intersect with the outer wall surface scanning line SLows and the inner wall surface scanning line SL_{IWS}.

The hatch scanning lines SL_{Hatch} may intersect with at least one of the offset scanning lines SLows-offset and at least one of the offset scanning lines SL_{IWS-offset}.

In an exemplary embodiment, the bulk scanning lines SL_{Bulk} comprise
- two or more (e.g. two to six) offset scanning lines SL_{OWS-offset},
- two or more (e.g. two to six) offset scanning lines SL_{IWS-offset},
- hatch scanning lines SL_{Hatch},
wherein
the hatch scanning lines SL_{Hatch} do not intersect with the offset scanning line SL_{OWS-offset} which is adjacent to the outer wall surface scanning line SLows but intersect with at least one of the other offset scanning lines SLows-offset; and
the hatch scanning lines SL_{Hatch} do not intersect with offset scanning line SL_{IWS-offset} which is adjacent to the inner wall surface scanning line SL_{IWS} but intersect with at least one of the other offset scanning lines SL_{IWS-offset}.

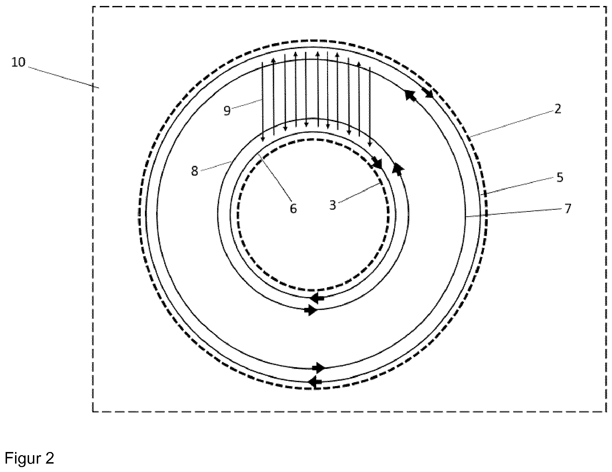

An exemplary beam scanning strategy which might be used in the present invention for preparing the thin-walled tube part of high aspect ratio, is illustrated in Figure 2. A metal powder layer 10 has been applied on a substrate. The beam scanning as illustrated in Figure 2 comprises:
(i) moving the laser or electron beam along an outer wall surface scanning line (SL_{OWS}) 5, thereby melting in the layer 10 the powder which is located at an area which will become part of the outer wall surface 2 in the final article,
(ii) moving the laser or electron beam along an inner wall surface scanning line (SL_{IWS}) 6, thereby melting in the layer 10 the powder which is located at an area which will become part of the inner wall surface 3 in the final article,
(iii) moving the laser or electron beam along an offset scanning line (SLows-offset) 7 which is offset from the outer wall surface scanning line (SLows) 5,
(iv) moving the laser or electron beam along an offset scanning line (SL_{IWS-offset}) 8 which is offset from the inner wall surface scanning line (SL_{IWS}) 6,
(v) moving the laser or electron beam along hatch scanning lines (SL_{Hatch}) 9.

In Figure 2, only some of the hatch scanning lines (SL_{Hatch}) 9 are shown. For melting in said layer 10 all the metal powder which becomes bulk part of the tube wall, further hatch scanning lines (SL_{Hatch}) 9 will be implemented. The outer wall surface scanning line (SLows) 5 and its offset scanning line (SLows-offset) 7 are parallel to each other. The same applies to the inner wall surface scanning line (SL_{IWS}) 6 and its offset scanning line (SL_{IWS-offset}) 8. The arrows indicate the scanning direction of the beam. The hatch scanning lines (SL_{Hatch}) 9 do not intersect with the outer wall surface scanning line (SLows) 5 and the inner wall surface scanning line (SL_{IWS}) 6, but intersect with the offset scanning lines 7 and 8 (i.e. offset scanning lines SL_{OWS-offset} and SL_{IWS-offset}).

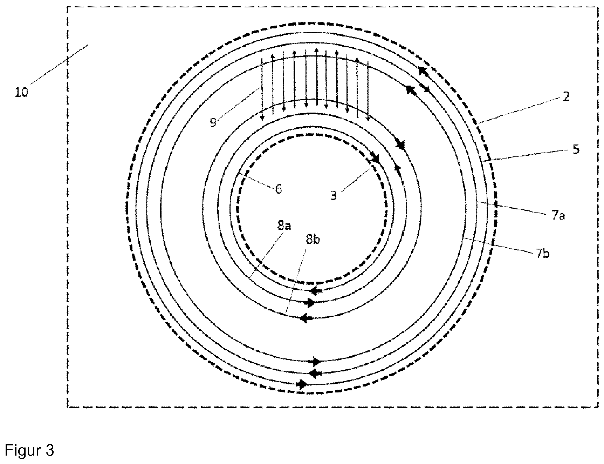

Another exemplary beam scanning strategy which might be used in the present invention for preparing the thin-walled tube part of high aspect ratio, is illustrated in Figure 3. A metal powder layer 10 has been applied on a substrate. The beam scanning as illustrated in Figure 3 comprises:
(i) moving the laser or electron beam along an outer wall surface scanning line (SL_{OWS}) 5, thereby melting in the layer 10 the powder which is located at an area which will become part of the outer wall surface 2 in the final article,
(ii) moving the laser or electron beam along an inner wall surface scanning line (SL_{IWS}) 6, thereby melting in the layer 10 the powder which is located at an area which will become part of the inner wall surface 3 in the final article,
(iii) moving the laser or electron beam along two offset scanning lines (SLows-offset) 7a, 7b, which are offset from the outer wall surface scanning line (SLows) 5,
(iv) moving the laser or electron beam along two offset scanning lines (SL_{IWS-offset}) 8a, 8b, which are offset from the inner wall surface scanning line (SL_{IWS}) 6,
(v) moving the laser or electron beam along hatch scanning lines (SL_{Hatch}) 9.

In Figure 3, only some of the hatch scanning lines (SL_{Hatch}) 9 are shown. For melting in said layer 10 all the metal powder which becomes bulk part of the tube wall, further hatch scanning lines (SL_{Hatch}) 9 will be implemented. The outer wall surface scanning line (SLows) 5 and its two offset scanning lines (SLows-offset) 7a, 7b are parallel to each other. The same applies to the inner wall surface scanning line (SL_{IWS}) 6 and its two offset scanning lines (SL_{IWS-offset}) 8a, 8b. The arrows indicate the scanning direction of the beam. The hatch scanning lines (SL_{Hatch}) 9 do not intersect with the outer wall surface and inner wall surface scanning lines 5 (SLows) and 6 (SL_{IWS}) and their adjacent offset scanning lines 7a and 8a, but intersect with the offset scanning lines 7b and 8b.

The process of the present invention is an additive manufacturing process. So, steps (a) and (b) are typically repeated at least once. Preferably, they are repeated until the additive manufacturing of the thin-walled tube part is completed. Accordingly, after the metal powder which was melted in step (b) has solidified, a further layer of the metal powder is applied in step (c) and the metal powder which becomes part of the thin-walled metal tube part is melted by a beam scanning step (d). In principle, a scanning strategy as applied in step (b) might be applied in step (d) as well.

The thin-walled metal tube comprises an amorphous metal alloy.

Metal alloys which have a high tendency to solidify in an amorphous state at moderate cooling rates are known to the skilled person. Reference can be made to the following publications:
- "Bulk Metallic Glasses - An Overview", Ed.: M. Miller and P. Liaw, Springer, pp. 2-17 and 210-222;
- A.L. Greer, Materials Today, Jan-Feb 2009, Vol. 12, pp. 14-22;
- A. Inoue et al., Materials, 2010, pp. 5320-5339.

The amorphous metal alloy might be a transition-metal-based alloy (e.g. a Zr-based alloy, a Cu-based alloy, a Fe-based alloy, a Ni-based alloy, a Ti-based alloy or a noble-metal-based alloy (such as a Pt- or Pd-based alloy)), an Al-based alloy, or a Mg-based alloy. The term "*Zr-based*" means that the metal element which is present in the highest concentration (in at%) in said alloy is zirconium. The same principle applies to the other alloys as well. Accordingly, in an Al-based alloy, Al is the element which is present in the highest concentration.

An exemplary Zr-based alloy which has a high tendency to solidify in an amorphous state at moderate cooling rates is a Zr-Cu-Al-Nb alloy containing 23.5 to 24.5 wt% Cu, 3.5 to 4.0 wt% Al, 1.5 to 2.0 wt% Nb, the balance being Zr. Another exemplary Zr-based alloy contains Zr, Ti, Cu, Ni and Al, such as Zr_{52,5}Ti₅CU_{17,9}Ni_{14,6}Al₁₀ (the indices being at%) and Zr_{59,3}Cu_{28,8}Al₁₀,4Nb_{1,5} (the indices being at%). Another exemplary Zr-based alloy contains Zr, Al, Ni, Cu and Pd, such as Zr₆₀Al₁₀Ni₁₀C_{U15}Pd₅ (the indices being at%). Another exemplary group of alloys contains at least Pt (at least 85 wt%), Cu and P and optionally Co and/or Ni such as Pt_{57.5}Cu_{14.5}Ni₅P₂₃ (the indices being at%).

In principle, the metal powder which is deposited layer by layer might already be amorphous. However, it is also possible that the metal powder is at least partially crystalline and, after being melted by the beam, quickly cools down and solidifies in an amorphous state.

As known to the skilled person, an amorphous metall alloy, if subjected to a differential scanning calorimetry measurement (DSC), shows a glass transition and, upon further heating, an exothermic transition into the crystalline state.

The thin-walled tube part comprising the amorphous metall alloy might be completely amorphous or might show some crystallinity, e.g. a crystallinity of less than 50%, more preferably less than 25% or even less than 10%. The degree of crystallinity might be determined by DSC as the ratio between the crystallisation enthalpy of the thin-walled tube part material and the crystallisation enthalpy of a completely amorphous (i.e. no diffraction peaks in X-ray diffraction) reference sample having the same chemical composition as the thin-walled tube part material.

If the thin-walled tube part shows some crystallinity, this may arise from crystalline areas which are dispersed in an amorphous matrix. So, in an exemplary embodiment, the amorphous metal alloy being present in the thin-walled tube part represents a matrix in which one or more crystalline metal alloys are dispersed (thereby forming a composite structure).

By the following Examples, the present invention will be illustrated in further detail.

### Examples

In Inventive Example 1 (IE1) and Comparative Example 1 (CE1), a thin walled tube part (wall thickness of 100-150 µm, height of 250 mm) was additively manufactured by laser beam melting using a TruPrint 1000 (Trumpf). Both in IE1 and CE1, the same zirconium-based alloy was used as a metal powder, and the laser beam spot diameter was 30 µm.The additively manufactured thin-walled tube part was substantially amorphous.

In CE1 and IE1, different scanning strategies were used, as outlined below.

### Comparative Example 1

In each deposited powder layer, the metal powder which becomes part of the thin-walled tube was melted by the following beam scanning steps:
Outer wall surface scanning:
   The laser beam was moved along an outer wall surface scanning line SLows, thereby melting the metal powder which is located at the outer wall surface of the thin-walled tube.
Inner wall surface scanning:
   The laser beam was moved along an inner wall surface scanning line SL_{IWS}, thereby melting the metal powder which is located at the inner wall surface of the thin-walled tube.
Bulk part scanning:
   The laser beam was moved along straight parallel hatch scanning lines SL_{Hatch}, thereby melting the metal powder of the bulk part of the thin tube wall. The hatch scanning lines SL_{Hatch} did not intersect with the outer and inner wall surface scanning lines SLows and SL_{IWS}.

Surface roughness Ra of the manufactured thin-walled tube was measured on its outer surface wall. A surface roughness Ra of 10.9 µm was obtained.

Furthermore, based on DIN EN ISO 1101, roundness (based on the inner tube diameter) and concentricity were measured at different heights of the thin-walled tube. The results are shown in Table 1.

**Table 1: Roundness and concentricity of Comparative Example 1**

| | Height of thin-walled tube part | | | | |
|---|---|---|---|---|---|
| | 5 mm | 10 mm | 15 mm | 20 mm | 25 mm |
| Roundness (based on inner tube diameter) [mm] | 0,0322 | 0,0512 | 0,0807 | 0,0962 | 0,1140 |
| Concentricity [mm] | 0,0474 | 0,0901 | 0,143 | 0,1842 | 0,233 |

### Inventive Example 1

In each deposited powder layer, the metal powder which becomes part of the thin-walled tube was melted by the following beam scans:
Outer wall surface scanning:
   The laser beam was moved along an outer wall surface scanning line SLows, thereby melting the metal powder which is located at the outer wall surface of the thin-walled tube part.
Inner wall surface scanning:
   The laser beam was moved along an inner wall surface scanning line SL_{IWS}, thereby melting the metal powder which is located at the inner wall surface of the thin-walled tube part.
Bulk part scanning:
   - The laser beam was moved along three offset scanning lines SL_{OWS-offset} which were offset from the outer wall surface scanning line SLows. Each of these offset scanning lines SL_{OWS-offset} was a parallel curve to the outer wall surface scanning line SLows (which means that the offset scanning lines SLows-offset were parallel to each other as well).
   - The laser beam was moved along three offset scanning lines SL_{IWS-offset} which were offset from the inner wall surface scanning line SL_{IWS}. Each of these offset scanning lines SL_{IWS-offset} was a parallel curve to the inner wall surface scanning line SL_{IWS} (which means that the offset scanning lines SL_{IWS-offset} were parallel to each other as well).
   - The laser beam was moved along straight parallel hatch scanning lines SL_{Hatch}. The hatch scanning lines SL_{Hatch} did not intersect with the outer and inner wall surface scanning lines SLows and SL_{IWS}.

Accordingly, different from Comparative Example 1, Inventive Example 1 applied additional bulk scanning steps by moving the beam (i) along offset scanning lines SL_{OWS-offset} which were offset from the outer surface wall scanning line SL_{OWS}, and (ii) along offset scanning lines SL_{IWS-offset} which were offset from the inner surface wall scanning line SL_{IWS}.

Surface roughness Ra of the manufactured thin-walled tube part was measured on its outer surface wall. A surface roughness Ra of 2.7 µm was obtained.

Furthermore, roundness (based on inner tube diameter and outer tube diameter) and concentricity were measured at different heights of the thin-walled tube part. The results are shown in Table 2.

**Table 2: Roundness and concentricity of Inventive Example 1**

| | Height of thin-walled tube part | | | | |
|---|---|---|---|---|---|
| | 5 mm | 10 mm | 15 mm | 20 mm | 25 mm |
| Roundness (based on inner tube diameter) [mm] | 0,041 | 0,039 | 0,039 | 0,038 | 0,045 |
| Concentricity [mm] | 0,021 | 0,046 | 0,078 | 0,092 | 0,126 |

As demonstrated by Inventive Example 1, the balance between high roundness, high concentricity and low surface roughness is significantly improved if additional beam scanning lines SL_{OWS-offset} and SL_{IWS-offset} which are offset from the outer and inner wall surface scanning lines SL_{OWS} and SL_{IWS} are used for melting the metal powder which becomes part of the thin-walled tube part.

## Claims

1. A process for preparing an article which comprises a thin-walled metal tube, wherein the thin-walled metal tube comprises an amorphous metal alloy, wherein the thin-walled metal tube has an outer wall surface, an inner wall surface, and a bulk part in between the outer and inner wall surfaces, and at least the thin-walled metal tube is prepared by additive manufacturing using laser or electron beam melting, comprising
(a) applying a layer of a metal powder on a substrate,
(b) scanning pre-defined areas of the layer with the beam, thereby melting the metal powder which becomes part of the thin-walled metal tube, wherein the scanning comprises
(b1) moving the beam along an outer wall surface scanning line SLows, thereby melting the powder which is located at the outer wall surface of the thin-walled metal tube;
(b2) moving the beam along an inner wall surface scanning line SL_{IWS}, thereby melting the powder which is located at the inner wall surface of the thin-walled metal tube;
(b3) moving the beam along bulk scanning lines SL_{Bulk}, thereby melting the powder which is located in the bulk part of the thin-walled metal tube, wherein the bulk scanning lines SL_{Bulk} comprise
(b3.1) one or more offset scanning lines SL_{OWS-offset} which are offset from the outer wall surface scanning line SLows, and
(b3.2) one or more offset scanning lines SL_{IWS-offset} which are offset from the inner wall surface scanning line SL_{IWS}.

2. The process according to claim1, wherein the bulk scanning lines SL_{Bulk} additionally comprise
(b3.3) hatch scanning lines SL_{Hatch}.

3. The process according to claim 1 or 2, wherein
- the distance Dows between the outer wall surface scanning line SLows and the adjacent offset scanning line SL_{OWS-offset} and, if two or more offset scanning lines SLows-offset are present, the distance Dows-offset between two adjacent offset scanning lines SLows-offset is in the range of 0.1*d_{bs} to 5.0*d_{bs}, wherein d_{bs} is the beam spot diameter; and
- the distance D_{IWS} between the inner wall surface scanning line SL_{IWS} and the adjacent offset scanning line SL_{IWS-offset} and, if two or more offset scanning lines SL_{IWS-offset} are present, the distance D_{IWS-offset} between two adjacent offset scanning lines SL_{IWS-offset} is in the range of 0.1*d_{bs} to 5.0*d_{bs}, wherein d_{bs} is the beam spot diameter.

4. The process according to one of the preceding claims, wherein
- the distance Dows between the outer wall surface scanning line SLows and the adjacent offset scanning line SL_{OWS-offset} and, if two or more offset scanning lines SLows-offset are present, the distance Dows-offset between two adjacent offset scanning lines SLows-offset varies by less than 25%; and
- the distance D_{IWS} between the inner wall surface scanning line SL_{IWS} and the adjacent offset scanning line SL_{IWS-offset} and, if two or more offset scanning lines SL_{IWS-offset} are present, the distance D_{IWS-offset} between two adjacent offset scanning lines SL_{IWS-offset} varies by less than 25%.

5. The process according to one of the preceding claims, wherein each of the offset scanning lines SL_{OWS-offset} is a parallel curve to the outer wall surface scanning line SLows; and/or each of the offset scanning lines SL_{IWS-offset} is a parallel curve to the inner wall surface scanning line SL_{IWS}.

6. The process according to one of the claims 2 to 5, wherein the hatch scanning lines SL_{Hatch} comprise straight lines which are parallel to each other or two adjacent hatch scanning lines SL_{Hatch} are inclined to each other by less than 20°; and/or the distance D_{Hatch} between two adjacent hatch scanning lines SL_{Hatch} is in the range of 0.1*d_{bs} to 5.0*d_{bs}, wherein d_{bs} is the beam spot diameter.

7. The process according to one of the preceding claims, wherein the bulk scanning lines SL_{Bulk} comprise at least two offset scanning lines SLows-offset and at least two offset scanning lines SL_{IWS-offset}.

8. The process according to one of the claims 2 to 7, wherein the hatch scanning lines SL_{Hatch} intersect with at least one of the offset scanning lines SLows-offset and at least one of the offset scanning lines SL_{IWS-offset}.

9. The process according to one of the claims 2 to 8, wherein the hatch scanning lines SL_{Hatch} do not intersect with the outer wall surface scanning line SLows and the offset scanning line SL_{OWS-offset} which is adjacent to the outer wall surface scanning line SLows but intersect with at least one of the other offset scanning lines SLows-offset; and the hatch scanning lines SL_{Hatch} do not intersect with the inner wall surface scanning line SL_{IWS} and the offset scanning line SL_{IWS-offset} which is adjacent to the inner wall surface scanning line SL_{IWS} but intersect with at least one of the other offset scanning lines SL_{IWS-offset}.

10. The process according to one of the preceding claims, wherein the beam has a beam spot diameter of 5 µm to 500 µm.

11. The process according to one of the preceding claims, wherein the thin-walled metal tube has a wall thickness of 10 mm or less.

12. The process according to one of the preceding claims, wherein the thin-walled tube has a height H and a minimum wall thickness Dₘᵢₙ, and the ratio H/Dₘᵢₙ is at least 10.

13. The process according to one of the preceding claims, wherein the thin-walled metal tube comprises an amorphous transition-metal-based alloy, an amorphous Al-based alloy or an amorphous Mg-based alloy.

14. The process according to one of the preceding claims, wherein the article is a flexspline.

## Patentansprüche

1. Verfahren zum Fertigen eines Gegenstands, der ein dünnwandiges Metallrohr umfasst, wobei das dünnwandige Metallrohr eine amorphe Metalllegierung umfasst, wobei das dünnwandige Metallrohr eine Außenwandfläche, eine Innenwandfläche und einen Massenteil zwischen der Außen- und der Innenwandfläche aufweist, und mindestens das dünnwandige Metallrohr durch additive Fertigung unter Verwendung von Laser- oder Elektronenstrahlschmelzen hergestellt wird, umfassend
(a) Auftragen einer Schicht aus einem Metallpulver auf ein Substrat,
(b) Abtasten vordefinierter Bereiche der Schicht mit dem Strahl, wodurch das Metallpulver geschmolzen wird, das Teil des dünnwandigen Metallrohrs wird, wobei das Abtasten Folgendes umfasst:
(b1) Bewegen des Strahls entlang einer Abtastlinie der Außenwandfläche SLows, wodurch das Pulver geschmolzen wird, das sich an der Außenwandfläche des dünnwandigen Metallrohrs befindet;
(b2) Bewegen des Strahls entlang einer Abtastlinie der Innenwandfläche SL_{IWS}, wodurch das Pulver geschmolzen wird, das sich an der Innenwandfläche des dünnwandigen Metallrohrs befindet;
(b3) Bewegen des Strahls entlang von Massenabtastlinien SL_{Bulk}, wodurch das Pulver geschmolzen wird, das sich in dem Massenteil des dünnwandigen Metallrohrs befindet, wobei die Massenabtastlinien SL_{Bulk} umfassen:
(b3.1) eine oder mehrere versetzte Abtastlinien SL_{OWS-offset}, die von der Abtastlinie der Außenwandfläche SLows versetzt sind, und
(b3.2) eine oder mehrere versetzte Abtastlinien SL_{IWS-offset}, die von der Abtastlinie der Innenwandfläche SL_{IWS} versetzt sind.

2. Verfahren nach Anspruch 1, wobei die Massenabtastlinien SL_{Bulk} zusätzlich Schraffurabtastlinien SL_{Hatch} umfassen (b3.3).

3. Verfahren nach Anspruch 1 oder 2, wobei
- der Abstand Dows zwischen der Abtastlinie der Außenwandfläche SLows und der benachbarten versetzten Abtastlinie SL_{OWS-offset} und, falls zwei oder mehr versetzte Abtastlinien SL_{OWS-offset} vorhanden sind, der Abstand D_{OWS-offset} zwischen zwei benachbarten versetzten Abtastlinien SL_{OWS-offset} in dem Bereich von 0,1*d_{bs} bis 5,0*d_{bs} liegt, wobei d_{bs} der Strahlpunktdurchmesser ist; und
- der Abstand D_{IWS} zwischen der Abtastlinie der Innenwandfläche SL_{IWS} und der benachbarten versetzten Abtastlinie SL_{IWS-offset} und, falls zwei oder mehr versetzte Abtastlinien SL_{IWS-offset} vorhanden sind, der Abstand D_{IWS-offset} zwischen zwei benachbarten versetzten Abtastlinien SL_{IWS-offset} in dem Bereich von 0,1*d_{bs} bis 5,0*d_{bs} liegt, wobei d_{bs} der Strahlpunktdurchmesser ist.

4. Verfahren nach einem der vorstehenden Ansprüche, wobei
- der Abstand Dows zwischen der Abtastlinie der Außenwandfläche SLows und der benachbarten versetzten Abtastlinie SL_{OWS-offset} und, falls zwei oder mehr versetzte Abtastlinien SL_{OWS-offset} vorhanden sind, der Abstand D_{OWS-offset} zwischen zwei benachbarten versetzten Abtastlinien SLows-offset um weniger als 25 % variiert; und
- der Abstand D_{IWS} zwischen der Abtastlinie der Innenwandfläche SL_{IWS} und der benachbarten versetzten Abtastlinie SL_{IWS-offset} und, falls zwei oder mehr versetzte Abtastlinien SL_{IWS-offset} vorhanden sind, der Abstand D_{IWS-offset} zwischen zwei benachbarten versetzten Abtastlinien SL_{IWS-offset} um weniger als 25 % variiert.

5. Verfahren nach einem der vorstehenden Ansprüche, wobei jede der versetzten Abtastlinien SL_{OWS-offset} eine Parallelkurve zu der Abtastlinie der Außenwandfläche SL_{OWS} ist; und/oder jede der versetzten Abtastlinien SL_{IWS-offset} eine Parallelkurve zu der Abtastlinie der Innenwandfläche SL_{IWS} ist.

6. Verfahren nach einem der Ansprüche 2 bis 5, wobei die Schraffurabtastlinien SL_{Hatch} gerade Linien umfassen, die parallel zueinander verlaufen, oder zwei benachbarte Schraffurabtastlinien SL_{Hatch} um weniger als 20° gegeneinander geneigt sind; und/oder der Abstand D_{Hatch} zwischen zwei benachbarten Schraffurabtastlinien SL_{Hatch} in dem Bereich von 0,1*d_{bs} bis 5,0*d_{bs} liegt, wobei d_{bs} der Strahlpunktdurchmesser ist.

7. Verfahren nach einem der vorstehenden Ansprüche, wobei die Massenabtastlinien SL_{Bulk} mindestens zwei versetzte Abtastlinien SL_{OWS-offset} und mindestens zwei versetzte Abtastlinien SL_{IWS-offset} umfassen.

8. Verfahren nach einem der Ansprüche 2 bis 7, wobei sich die Schraffurabtastlinien SL_{Hatch} mit mindestens einer der versetzten Abtastlinien SL_{OWS-offset} und mindestens einer der versetzten Abtastlinien SL_{IWS-offset} überschneiden.

9. Verfahren nach einem der Ansprüche 2 bis 8, wobei sich die Schraffurabtastlinien SL_{Hatch} nicht mit der Abtastlinie der Außenwandfläche SL_{OWS} und der an die Abtastlinie der Außenwandfläche SLows angrenzenden versetzten Abtastlinie SLows-offset überschneiden, sondern sich mit mindestens einer der anderen versetzten Abtastlinien SL_{OWS-offset} überschneiden; und die Schraffurabtastlinien SL_{Hatch} sich nicht mit der Abtastlinie der Innenwandfläche SL_{IWS} und der versetzten Abtastlinie SL_{IWS-offset} überschneiden, die der Abtastlinie der Innenwandfläche SL_{IWS} benachbart ist, sich aber mit mindestens einer der anderen versetzten Abtastlinien SL_{IWS-offset} überschneidet.

10. Verfahren nach einem der vorstehenden Ansprüche, wobei der Strahl einen Strahlpunktdurchmesser von 5 µm bis 500 µm aufweist.

11. Verfahren nach einem der vorstehenden Ansprüche, wobei das dünnwandige Metallrohr eine Wandstärke von 10 mm oder weniger aufweist.

12. Verfahren nach einem der vorstehenden Ansprüche, wobei das dünnwandige Rohr eine Höhe H und eine minimale Wandstärke Dₘᵢₙ aufweist und das Verhältnis H/Dₘᵢₙ mindestens 10 beträgt.

13. Verfahren nach einem der vorstehenden Ansprüche, wobei das dünnwandige Metallrohr eine amorphe Legierung auf Übergangsmetallbasis, eine amorphe Legierung auf AI-Basis oder eine amorphe Legierung auf Mg-Basis umfasst.

14. Verfahren nach einem der vorstehenden Ansprüche, wobei der Gegenstand ein Flexspline ist.

## Revendications

1. Procédé de préparation d'un article qui comprend un tube métallique à paroi mince, le tube métallique à paroi mince comprenant un alliage métallique amorphe, dans lequel le tube métallique à paroi mince présente une surface de paroi extérieure, une surface de paroi intérieure et une partie massive entre les surfaces de paroi extérieure et intérieure, et au moins le tube métallique à paroi mince est préparé par fabrication additive en utilisant une fusion par faisceau laser ou électronique, comprenant
(a) l'application d'une couche d'une poudre métallique sur un substrat,
(b) le balayage de zones prédéfinies de la couche avec le faisceau, faisant ainsi fondre la poudre métallique qui devient une partie du tube métallique à paroi mince, dans lequel le balayage comprend
(b1) le déplacement du faisceau le long d'une ligne de balayage de surface de paroi extérieure SLows, faisant ainsi fondre la poudre qui est située au niveau de la surface de paroi extérieure du tube métallique à paroi mince;
(b2) le déplacement du faisceau le long d'une ligne de balayage de surface de paroi intérieure SL_{IWS}, faisant ainsi fondre la poudre qui est située au niveau de la surface de paroi intérieure du tube métallique à paroi mince;
(b3) le déplacement du faisceau le long de lignes de balayage dans la masse SL_{Bulk}, faisant ainsi fondre la poudre qui est située dans la partie massive du tube métallique à paroi mince, dans lequel les lignes de balayage dans la masse SL_{Bulk} comprennent
(b3.1) une ou plusieurs lignes de balayage de décalage SLows-offset qui sont décalées par rapport à la ligne de balayage de surface de paroi extérieure SLows, et
(b3.2) une ou plusieurs lignes de balayage de décalage SL_{IWS-offset} qui sont décalées par rapport à la ligne de balayage de surface de paroi intérieure SL_{IWS}.

2. Procédé selon la revendication 1, dans lequel les lignes de balayage dans la masse SL_{Bulk} comprennent en outre
(b3.3) des lignes de balayage hachurées SL_{Hatch}.

3. Procédé selon la revendication 1 ou 2, dans lequel
- la distance Dows entre la ligne de balayage de surface de paroi extérieure SLows et la ligne de balayage de décalage adjacente SL_{OWS-offset} et, si deux lignes de balayage de décalage SL_{OWS-offset} ou plus sont présentes, la distance Dows-offset entre deux lignes de balayage de décalage SLows-offset adjacentes est dans la plage de 0,1*d_{bs} à 5,0*d_{bs}, d_{bs} étant le diamètre de point de faisceau; et
- la distance D_{IWS} entre la ligne de balayage de surface de paroi intérieure SL_{IWS} et la ligne de balayage de décalage adjacente SL_{IWS-offset} et, si deux lignes de balayage de décalage SL_{IWS-offset} ou plus sont présentes, la distance D_{IWS-offset} entre deux lignes de balayage de décalage SL_{IWS-offset} adjacentes est dans la plage de 0,1*d_{bs} à 5,0*d_{bs}, d_{bs} étant le diamètre de point de faisceau.

4. Procédé selon l'une des revendications précédentes, dans lequel
- la distance Dows entre la ligne de balayage de surface de paroi extérieure SLows et la ligne de balayage de décalage adjacente SL_{OWS-OFFSET} et, si deux lignes de balayage de décalage SLows-offset ou plus sont présentes, la distance Dows-offset entre deux lignes de balayage de décalage SLows-offset adjacentes varie de moins de 25 %; et
- la distance D_{IWS} entre la ligne de balayage de surface de paroi intérieure SL_{IWS} et la ligne de balayage de décalage adjacente SL_{IWS-offset} et, si deux lignes de balayage de décalage SL_{IWS-offset} ou plus sont présentes, la distance D_{IWS-offset} entre deux lignes de balayage de décalage SL_{IWS-offset} adjacentes varie de moins de 25 %.

5. Procédé selon l'une des revendications précédentes, dans lequel chacune des lignes de balayage de décalage SL_{OWS-offset} est une courbe parallèle à la ligne de balayage de surface de paroi extérieure SLows; et/ou chacune des lignes de balayage de décalage SL_{IWS-offset} est une courbe parallèle à la ligne de balayage de surface de paroi intérieure SL_{IWS}.

6. Procédé selon l'une des revendications 2 à 5, dans lequel les lignes de balayage hachurées SL_{Hatch} comprennent des lignes droites parallèles entre elles ou deux lignes de balayage hachurées SL_{Hatch} adjacentes sont inclinées l'une par rapport à l'autre de moins de 20°; et/ou la distance D_{Hatch} entre deux lignes de balayage hachurées SL_{Hatch} adjacentes est dans la plage de 0,1*d_{bs} à 5,0*d_{bs}, d_{bs} étant le diamètre de point de faisceau.

7. Procédé selon l'une des revendications précédentes, dans lequel les lignes de balayage dans la masse SL_{Bulk} comprennent au moins deux lignes de balayage de décalage SL_{OWS-offset} et au moins deux lignes de balayage de décalage SL_{IWS-offset}.

8. Procédé selon l'une des revendications 2 à 7, dans lequel les lignes de balayage hachurées SL_{Hatch} coupent au moins une des lignes de balayage de décalage SLows-offset et au moins une des lignes de balayage de décalage SL_{IWS-offset}.

9. Procédé selon l'une des revendications 2 à 8, dans lequel les lignes de balayage hachurées SL_{Hatch} ne coupent pas la ligne de balayage de surface de paroi extérieure SLows et la ligne de balayage de décalage SL_{OWS-offset} qui est adjacente à la ligne de balayage de surface de paroi extérieure SLows mais coupent au moins une des autres lignes de balayage de décalage SLows-offset; et les lignes de balayage hachurées SL_{Hatch} ne coupent pas la ligne de balayage de surface de paroi intérieure SL_{IWS} et la ligne de balayage de décalage SL_{IWS-offset} qui est adjacente à la ligne de balayage de surface de paroi intérieure SL_{IWS} mais coupent au moins une des autres lignes de balayage de décalage SL_{IWS-offset}.

10. Procédé selon l'une des revendications précédentes, dans lequel le faisceau présente un diamètre de point de faisceau de 5 µm à 500 µm.

11. Procédé selon l'une des revendications précédentes, dans lequel le tube métallique à paroi mince présente une épaisseur de paroi inférieure ou égale à 10 mm.

12. Procédé selon l'une des revendications précédentes, dans lequel le tube à paroi mince présente une hauteur H et une épaisseur de paroi minimale Dₘᵢₙ et le rapport H/Dₘᵢₙ est d'au moins 10.

13. Procédé selon l'une des revendications précédentes, dans lequel le tube métallique à paroi mince comprend un alliage à base de métal de transition amorphe, un alliage à base d'Al amorphe ou un alliage à base de Mg amorphe.

14. Procédé selon l'une des revendications précédentes, dans lequel l'article est une couronne flexible.
